(19) Europäisches Patentamt
European Patent Office
Office européen des brevets

(11) Veröffentlichungsnummer: **0 069 213**
**B1**

(12) # EUROPÄISCHE PATENTSCHRIFT

(45) Veröffentlichungstag der Patentschrift: **02.05.85**

(51) Int. Cl.⁴: **H 04 H 1/00,** H 04 B 1/20

(21) Anmeldenummer: **82103929.4**

(22) Anmeldetag: **06.05.82**

(54) **Autoradio-Kassettengerät.**

(30) Priorität: **02.07.81 DE 3126117**

(43) Veröffentlichungstag der Anmeldung: **12.01.83 Patentblatt 83/2**

(45) Bekanntmachung des Hinweises auf die Patenterteilung: **02.05.85 Patentblatt 85/18**

(84) Benannte Vertragsstaaten: **AT FR GB IT**

(56) Entgegenhaltungen:
**DE - A - 2 731 368**

**FUNKSCHAU, Heft 24, 1976, Franzis-Verlag, München R. WIESCHHOFF "FM 2002 - ein Hi-Fi-Tuner der Weltspitzenklasse" Seiten 1067-1072**
**FUNKSCHAU, Heft 24, 1976, Franzis-Verlag, München K.W. RÜDIGER, K.J. WISCHGOLL "Drahtloser Infrarot-Kopfhörer - jetzt auch in Stereo" Seiten 1063-1066**
**FUNKSCHAU, Heft 14, 1979, Franzis-Verlag, München "Verkehrsfunkdecoder für Sender- und Durchsagekennung" Seite 844**

(73) Patentinhaber: **Blaupunkt-Werke GmbH, Robert-Bosch-Strasse 200, D-3200 Hildesheim (DE)**

(72) Erfinder: **Timm, Horst, Ing.grad., Ulmenweg 31, D-3200 Hildesheim (DE)**
Erfinder: **Krüger, H.-Eckhard, Dr. Ing., Hinterm Kirchdorf 14, D-3200 Hi-Sorsum (DE)**

(74) Vertreter: **Eilers, Norbert, Dipl.-Phys., Blaupunkt-Werke GmbH Robert-Bosch-Strasse 200, D-3200 Hildesheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung bezieht sich auf ein kombiniertes Autoradio-Kassettengerät nach dem Oberbegriff des Anspruches 1.

Bei solchen Geräten, deren Verkehrsrundfunkdecoder neben der von UKW-Verkehrsrundfunksendern ständig abgestrahlten Senderkennung auch die nur während einer Durchsage abgestrahlte Durchsagekennung auswerten, wird mittels einer Automatikschaltung eine Verkehrsnachricht eines eingestellten Verkehrsrundfunksenders auch bei leise gedrehtem oder stumm geschaltetem Rundfunkempfang bzw. bei Kassettenbetrieb durchgeschaltet bzw. durch automatische Lautstärkeanhebung hörbar. Der Kassettenbetrieb wird dabei während einer Verkehrsdurchsage unterbrochen.

Einfachere Geräteausführungen enthalten ähnliche Automatikschaltungen, mit welchen beim Eintreffen einer Verkehrsdurchsage durch Auswerten der Durchsagekennfrequenz ein akustisches Hinweissignal ausgelöst wird.

Je nach Ausführung können solche Geräte ausserdem eine Abstimmhilfe oder eine Suchlaufautomatik zum einfachen Einstellen eines Verkehrsrundfunksenders haben.

Aus der Zeitschrift «Funkschau», Heft 14, 1979, Seite 844 ist ein Autoradio-Kassettengerät bekannt, bei dem der Höranschluss über eine Verkehrsfunk-Durchsageautomatik wahlweise an den NF-Ausgang des Kassettenteils oder des Rundfunkempfangsteils anschliessbar ist, um eine Verkehrsdurchsage auch bei Kassettenbetrieb sicherzustellen.

Derart ausgestattete Geräte bieten dem Kraftfahrer die Möglichkeit, sich anhand der Verkehrsdurchsagen laufend über das Verkehrsgeschehen zu informieren.

Bei allen Betriebsarten dieser bekannten Geräte erfolgt die Wiedergabe über Lautsprecher. Es fehlt die Möglichkeit für die Mitfahrer, unabhängig von den jeweiligen Hörwünschen des Fahrers bzw. ohne den Fahrer zu stören, eine Rundfunksendung oder ein Kassettenprogramm zu hören.

Aus der Zeitschrift «Funkschau», Heft 24, 1976, Seiten 1067 - 1072 ist es bekannt, Radiogeräte drahtlos über Infrarotkopplung mit Kopfhörern zu verbinden. Ferner ist aus der Zeitschrift «Funkschau», Heft 24, 1976, Seiten 1063 - 1066 ein HIFI-Tuner bekannt, der einen separaten Kopfhörerverstärker aufweist.

Der Erfindung liegt die Aufgabe zugrunde, ein durch eine einfach und raumsparend aufgebaute Schaltungserweiterung verbessertes Autoradio-Kassettengerät zu schaffen, welches unter Beibehaltung vorhandener Verkehrsinformations-, Durchschalt-, Anzeige- und/oder Warnfunktionen zusätzliche Betriebsarten, insbesondere einen gleichzeitigen Betrieb von Radio und Kassettenteil ermöglicht, um gegebenenfalls unterschiedlichen Hörbedürfnissen des Fahrers und eventueller Mitfahrer Rechnung zu tragen.

Diese Aufgabe wird durch die im Anspruch 1 angegebene Erfindung gelöst.

Vorteilhafte Ausgestaltungen und Weiterbildungen der Erfindung sind in den Unteransprüchen angegeben.

Die erfindungsgemässe Geräteausführung mit einem oder mehreren Kopfhöreranschlüssen ermöglicht also Mitfahrern ohne Beeinflussung der jeweils vom Fahrer gewünschten Gerätefunktion unter voller Beibehaltung der Verkehrs-Durchsageautomatik, über Kopfhörer wahlweise eine Rundfunksendung oder ein Kassettenprogramm zu hören.

Bei einer bevorzugten Ausführungsform der Erfindung sind neben dem mit vorhandenen Geräten möglichen Kassettenbetrieb über Lautsprecher bei stummgeschaltetem Radio zumindest drei weitere Betriebsarten möglich, nämlich wahlweise Kassetten- oder Rundfunkempfang über Kopfhörer bei stummgeschaltetem Lautsprecher sowie Radioempfang über Lautsprecher bei gleichzeitigem Kassettenempfang über Kopfhörer, wobei die Durchsageautomatik und/oder -anzeige in jedem Fall voll erhalten bleibt.

Die Umschaltung erfolgt mit Hilfe eines vorzugsweise passiv aufgebauten Wahlschalters über eine Schaltlogik zur Erzeugung von Schaltsignalen für die gesteuerten Durchgänge eines für die Durchsageautomatik ohnehin vorhandenen, durch weitere Durchgänge erweiterten elektronischen Schalters.

Durch einfache Schaltungserweiterung können mit dem erfindungsgemässen Prinzip noch weitere Umschaltfunktionen verwirklicht werden, falls dies erwünscht ist. So wäre es beispielsweise ohne nennenswerten Mehraufwand möglich, bei einer Geräteausführung mit mehreren Kopfhörern, einen Kopfhörer auf Radioempfang und einen Kopfhörer auf Kassettenempfang zu schalten, und zwar wiederum wahlweise bei stummgeschaltetem Lautsprecher oder gleichzeitiger Radio- oder Kassettenwiedergabe über Lautsprecher.

Weitere Vorzüge und Merkmale der Erfindung ergeben sich aus der nachfolgenden Beschreibung und der Zeichnung, in welchen die Erfindung beispielsweise näher erläutert und dargestellt ist. Es zeigen:

Fig. 1 ein Blockschaltbild der in Verbindung mit der Erfindung interessierenden Schaltungsteile eines kombinierten Autoradio-Kassettengerätes mit Verkehrsfunkdecoder,

Fig. 2 einen zum Teil als Blockschaltbild dargestellten Schaltungsauszug aus einem bekannten Gerät der erfindungsgemässen Gattung,

Fig. 3 eine erfindungsgemässe Schaltungserweiterung der in Fig. 2 auszugsweise gezeigten Geräteschaltung,

Fig. 4 die Verbindung einer Schaltlogik zur Erzeugung analoger Steuersignale zur Umschaltung des elektronischen Schalters in Abhängigkeit von drei Arbeitsstellungen des Wahlschalters,

Fig. 5 einen zur Schaltlogik in Fig. 4 gehörenden Analog-Digital-Wandler zur Umsetzung der mittels des Wahlschalters eingestellten Analogsignale in digitale Steuersignale und

Fig. 6 eine Darstellung der in Abhängigkeit von der Stellung des Wahlschalters in Fig. 4 erzeugten Analogsignale.

Fig. 1 zeigt als wesentliche Teile eines kombinierten Kassetten-Autoradios mit UKW-Stereo-Rundfunkempfang und Stereo-Kassettenwiedergabe einen

Hochfrequenz-Empfangsteil 10, einen Niederfrequenz-Endverstärker 12 mit angeschlossenem Lautsprecher 14 und einen Kassettenteil 16. Von einem integrierten Verkehrsrundfunk-Decoder sind eine Auswertestufe 18 für die Durchsagekennung (DK) ein elektronischer Niederfrequenz-Schalter 20 und eine Durchsagekennungstaste 22 dargestellt, durch deren Betätigung die je nach Geräteausführung vorhandene Durchsage-Automatik oder Durchsage-Anzeige eingeschaltet wird. Bei gedrückter DK-Taste 22 wird der elektronische Schalter für die Niederfrequenz nur während einer Verkehrsdurchsage geschlossen.

Die Verbindungen der hier gezeigten Schaltungsteile sind nur schematisch angedeutet, da derartige Schaltungen und deren Funktion im Prinzip bekannt sind. Unabhängig von gerätespezifischen Abwandlungen erfolgen alle zur Durchschaltung einer Verkehrsdurchsage notwendigen Umschaltungen des Rundfunkempfangsteiles und des Kassettenteiles über gesteuerte Schaltwege des elektronischen Schalters 29. Die Umschaltung des elektronischen Schalters erfolgt jeweils in Abhängigkeit von der mit einer Verkehrsdurchsage empfangenen Durchsagekennung bzw. dadurch ausgelöster Steuersignale.

Neben den an sich bekannten Schaltungsteilen enthält die in Fig. 1 gezeigte Schaltung einen zusätzlichen Schaltungsteil 24 mit Anschlüssen für beispielsweise zwei Kopfhörer KH 1 und KH 2, deren Ansteuerung über den elektronischen Schalter 20 mit Hilfe eines unten noch erläuterten Wahlschalters zur Einstellung einer gewünschten Betriebsart erfolgt. In Fig. 1 ist die Verbindung des elektronischen Schalters 20 und des zusätzlichen Schaltungsteiles 214 lediglich durch eine Steuerleitung 26 und eine Signalleitung 28 angedeutet.

Der zusätzliche Schaltungsteil kann in einem Anschluss- oder Verteilerkasten untergebracht sein, in welchem gleichzeitig ein Balance- und Lautstärkeregler für die Kopfhörer und gegebenenfalls ein Ein-Aus-Schalter zum Umschalten auf Kopfhörer enthalten sein kann. Es ist von Vorteil, nur passive Elemente in dem Anschlusskasten unterzubringen, damit dieser ohne gesonderte Stromversorgung arbeitet. Der vom Gerät getrennte Verteiler bzw. Anschlusskasten für die Kopfhörer kann beispielsweise zwischen den Vordersitzen des Fahrzeuges montiert werden, so dass sie von den Mitfahren je nach Wunsch bedient werden können, ohne den Fahrer zu stören.

Besondere Vorteile ergeben sich durch die Verwendung von Infrarot-Kopfhörern, für die Fernsehempfänger an sich schon bekannt sind. Ein kleines, in den Bügel des Infrarot-Kopfhörers integriertes Kästchen nimmt dabei die für den Betrieb notwendige Batterie, eine Sendediode, eine Empfangsdiode sowie Balance- und Lautstärkeregler auf, so dass ohne Verteilerkasten eine drahtlose Verbindung mit dem Gerät möglich ist.

Der vereinfachte Schaltungsauszug aus dem zum Lieferprogramm der Anmelderin gehörenden Vollstereo-Gerät Essen Stereo CR Super-Arimat veranschaulicht in Verbindung mit der in Fig. 2 dargestellten Schaltungserweiterung, wie sich die anhand der Fig. 1 erläuterte Prinzipschaltung mit leichten Schaltungsänderungen in einem bekannten Gerät verwirklichen lässt.

Die Verbindungspunkte der Schaltungserweiterung gemäss Fig. 3 mit der bekannten Geräteschaltung gemäss Fig. 2 sind jeweils mit A bis D für die an Steuereingängen des elektronischen Schalters 20 liegenden Schaltsignalleitungen und mit X bzw. Y für die vom Stereo-Decoder 30 des UKW-Rundfunkempfangsteiles bzw. die vom Kassettenteil 16 kommenden NF-Signalleitungen bezeichnet. L und R bezeichnen jeweils den linken bzw. rechten Stereokanal. Mit MPX ist das dem Stereodecoder vom Ratio-Decoder des Rundfunkempfängers zugeführte Multiplexsignal bezeichnet.

Als elektronischer Schalter für die Durchsage-Lautstärke-Automatik ist ein Baustein $20_I$, beispielsweise ein MC14066B, mit vier durch Schaltsignale an den Steuereingängen A und B betätigbaren Schaltern zur jeweiligen Durchschaltung der gemäss Darstellung angeschlossenen NF-Signalleitungen, einem Anschluss für eine Speisegleichspannung von z.B. +8,5 V und einem Masseanschluss vorhanden.

Die Steuersignale A' und B' für den NF-Schalter $20_I$ werden in dieser Schaltung in Abhängigkeit von der beim Eintreffen einer UKW-Verkehrsdurchsage ausgewerteten und von der Auswertestufe des Verkehrsdecoders 18 dem Kassettenteil 16 zugeführten Durchsagekennung DK erzeugt und gelangen vom Kassettenteil 16 an die Steuereingänge A bzw. B des NF-Schalters $20_I$.

Für die hier betrachtete Schaltung gemäss Fig. 2 besteht also der Ist-Zustand A' = A, B' = B.

Für die Funktion des Autoradio-Kassettengerätes gilt die

*Wahrheitstabelle 1:*

| Betriebsart / Schaltsignal | Kassette | Autoradio |
|---|---|---|
| A' = A | H | O |
| B' = B | O | H |

(O = OV; H = 8,5 V)

Ist diese Schaltung bei Kassettenbetrieb und stummgeschaltetem Empfänger auf Durchsagebereitschaft für Verkehrsinformationen eines eingestellten UKW-Verkehrssenders geschaltet, wird der Kassettenbetrieb durch ein während einer Verkehrsdurchsage am Kassettenteil liegendes DK-Signal unterbrochen und der Rundfunkteil über den NF-Schalter $20_I$ auf Empfang geschaltet. Das während einer Verkehrsdurchsage am Schalttransistor 32 liegende DK-Signal dient zur Aufhebung der Stummschaltung und zur Lautstärkeanhebung für die Dauer der Verkehrsmeldung.

Ein Einstellwiderstand 34 im Stummschaltungsteil des Empfängers dient zur Einstellung der Fusspunktlautstärke am NF-Verstärker 12. Ausgangslautstärke und Balance sind mit Reglern 36L, 36R bzw. 38 einstellbar.

Fig. 3 zeigt eine nach dem Hauptmerkmal der Erfindung vorhandene vorteilhaft einfach aufgebaute Erweiterung der in Fig. 2 dargestellten Schaltung. Ein mit der Zusatzschaltung gemäss Fig. 3 ausgestattetes Autoradio-Kassettengerät enthält zur Erweiterung des elektronischen Schalters 20 einen mit dem gemäss Fig. 2 vorhandenen Baustein $20_I$ übereinstimmenden zusätzlichen Vierfach-NF-Schalter $20_{II}$, über welchen die vom Rundfunkempfangsteil und vom Kassettenteil des Gerätes kommenden NF-Signalleitungen zu beispielsweise zwei parallelen Kopfhörerausgängen KH 1 und KH 2 durchgeschaltet werden können.

Die über einen Kopfhörer-Verstärker 40 angesteuerten Kopfhöreranschlüsse befinden sich bei dem gezeigten Ausführungsbeispiel in einem Anschlusskasten 24, der Lautstärkeregler 42 für die Kopfhörerausgänge und einen Wahlschalter 44 enthält, der beispielsweise drei Arbeitsstellungen für verschieden Betriebsarten a, b und c sowie eine Nullstellung d zum abschalten der Kopfhöreranschlüsse besitzt.

Der Betriebsart-Wahlschalter 44 ist über eine entsprechend Fig. 1 mit 26 bezeichnete Schaltleitung an eine Schaltlogik 46 angeschlossen, die weitere Eingänge für Schaltsignale A', B' besitzt, welche bei der gezeigten Geräteausführung vom Kassettenteil 16 kommen, siehe Fig. 2.

Die mit Hilfe des Wahlschalters 44 umschaltbare logische Verknüpfungsschaltung 46 dient zur Erzeugung von Schaltsignalen A, B, C bzw. D, welche zur Einschaltung der jeweils gewünschten Betriebsart über Schaltleitungen an den entsprechend bezeichneten Steuereingängen der den elektronischen NF-Schalter 20 bildenden Bausteine $20_I$ und $20_{II}$ liegen.

Eine Umschaltung der Kopfhörer auf Kassette oder Autoradio erfolgt bei dieser Schaltung mit Hilfe der Schaltsignale C bzw. D gemäss nachstehender

*Wahrheitstabelle 2:*

| Schaltsignal \ Kopfhörer-Funktion | Kassette | Autoradio |
|---|---|---|
| C | H | O |
| D | O | H |

(O = OV; H = 8,5 V)

Mit Hilfe des Wahlschalters 44 kann die gemäss Fig. 2 und 3 aufgebaute Schaltung des hier betrachteten Ausführungsbeispieles eines erfindungsgemässen Autoradio-Kassettengerätes auf die folgenden Betriebsarten umgeschaltet werden:

a) Kassette auf Kopfhörer, Lautsprecher stumm einstellbar, Verkehrsdurchsageautomatik bleibt erhalten

b) Autoradio auf Kopfhörer, Lautsprecher stumm einstellbar, Verkehrsdurchsageautomatik bleibt erhalten

c) Autoradio auf Lautsprecher, Kassette auf Kopfhörer

d) Kassette auf Lautsprecher, Autoradio stumm geschaltet (bei bekannten Geräten üblicherweise vorhandene Betriebsart).

Zur Erzeugung der Schaltsignale für die jeweiligen Betriebsfälle arbeitet die Schaltlogik 46 nach der folgenden

*Wahrheitstabelle 3:*

| Betriebsfall \ Schaltsignal | A' | B' | A | B | C | D | Zustandsvergleich A' B' - A B |
|---|---|---|---|---|---|---|---|
| a | H | O | H | O | H | O | = |
| b | O | H | O | H | O | H | = |
| c | H | O | O | H | H | O | ≠ |
| d | H | O | H | O | beliebig | | = |

(O = OV und H = 8,5 V)

Für eine gemäss Fig. 3 mögliche Fernbedienung mit Hilfe des im Anschlusskasten 24 untergebrachten Wahlschalters 44 werden nur zwei Signalleitungen für die Niederfrequenz, eine Schaltleitung und eine Masseverbindung benötigt. Die Signalverbindung über niederohmige Leitungen ist wegen des hohen Pegels der Niederfrequenz unkritisch.

Es besteht auch die vorteilhafte Möglichkeit einer Signalübertragung über eine Infrarot-Strecke mit zwei zum Fernbedienungsteil führenden Analogkanälen und einem zum Autoradio-Kassettengerät führenden Digitalkanal. Die Schnittstellen für eine solche Infrarotübertragung sind in Fig. 3 mit S 1, S 2 und S 3 angedeutet.

Fig. 4 zeigt eine vorteilhaft einfach ohne aktive Elemente aufgebaute Anordnung für eine Dreifach-Umschaltung der Kopfhöreranschlüsse durch Einschalten der Stellungen a, b, c, d des Wahlschalters 44, wobei nur eine einzige Signalleitung und eine Masseverbindung zur Schaltlogik benötigt werden, jedoch keine Stromversorgung.

Zur Einschaltung einer der Betriebsarten A, B bzw. C wird bei dieser Anordnung jeweils ein passiver Widerstand $R_A$, $R_B$ bzw. $R_C$ mit Hilfe des Wahlschalters

44 einem in der Schaltlogik 46 liegenden Messwiderstand $R_m$ in Reihe geschaltet, um die an diesem Widerstand abfallende Grundspannung $U_m$ auf einen für die jeweilige Schaltspannung vorgegebenen Wert zu bringen, siehe auch Fig. 6. Die auf diese Weise einstellbare Schaltspannung wird von einer Hilfsspannungsquelle $U_H$, beispielsweise von der Autobatterie geliefert.

Fig. 5 zeigt eine nach dem Prinzip eines Analog-Digital-Wandlers aufgebaute Schaltung zur Umwandlung der bei den Schaltstellungen a, b bzw. c auftretenden Spannungs-Analogsignale $U_{ma}$, $U_{mb}$ bzw. $U_{mc}$ in logische Ausgangssignale.

Die Schaltung enthält drei Schwellwertschalter, deren Spannungsteiler $R_1$, $R_1'$ bis $R_3$, $R_3'$ so abgeglichen werden, dass an den Ausgängen 1 bis 3 die jeweils gewünschten logischen Ausgangssignale auftreten.

Für diese Schaltung lautet die

*Wahrheitstabelle 4:*

| Betr. fall | $U_m$ | Ausgang 1 | 2 | 3 |
|---|---|---|---|---|
| a) | $0V < U_m < 2V$ | H | H | H |
| b) | $2V < U_m < 4V$ | O | H | H |
| c) | $4V < U_m < 6V$ | O | O | H |
| d) | 0V | H | H | H |

Die logische Verknüpfung zwischen den Signalen 1, 2, 3 und A, B, A', B', C, D lässt sich anhand dieser Wahrheitstabellen mit einfachen integrierten Standardbausteinen herstellen.

Wird beispielsweise mit dem Wahlschaltr 44 der oben angegebene Betriebsfall a eingestellt, erzeugt die Schaltlogik 46 nach der oben angegebenen Wahrheitstabelle 1 die Ausgangssignale:

$$A = H, \quad B = O, \quad C = H, \quad D = O$$

Damit sind die NF-Umschalter $20_I$ und $20_{II}$ so geschaltet, dass bei stummgeschaltetem Lautsprecher und beibehaltener Verkehrsdurchsageautomatik die Kassettenwiedergabe über Kopfhörer erfolgt.

Da A' gleich A und B' gleich B ist, siehe die Wahrheitstabelle 3, schaltet der NF-Schalter $20_I$ bei ankommender Durchsagekennung für die Dauer der Verkehrsdurchsage auf Radiobetrieb über Lautsprecher und Normallautstärke um. Entsprechendes gilt für die weiteren Betriebsfälle des vorstehend erläuterten Ausführungsbeispieles der Erfindung.

**Patentansprüche**

1. Autoradio-Kassettengerät mit Kassettenteil (16) und Verkehrsfunkdecoder (18) mit Auswertung der Durchsagekennung und einem in Abhängigkeit von dieser gesteuerten elektronischen Mehrfachschalter (20) zur automatischen Durchschaltung des Rundfunktons auf den oder die Lautsprecher (14) des Gerätes beim Empfang einer Verkehrsdurchsage eines UKW-Verkehrsfunksenders, gekennzeichnet durch eine Zusatzschaltung für wenigstens einen Kopfhöreranschluss, welcher unter Beibehaltung der Durchsageautomatik über weitere, mittels wählbarer Schaltsignale (C, D) gesteuerte Signalwege des elektronischen Schalters ($20_{II}$) bei verschiedenen, Kassetten- und/oder Radio-Betrieb wählbar umfassenden Betriebsarten wahlweise an den Niederfrequenzausgang des Kassettenteils (12) oder des Rundfunkempfangsteils anschliessbar ist.

2. Gerät nach Anspruch 1, dadurch gekennzeichnet, dass die Zusatzschaltung eine logische Verknüpfungsschaltung (46) enthält, welcher die von der Auswertestufe des Verkehrsdecoders in Abhängigkeit von der Durchsagekennung ausgelösten Steuersignale (A', B') zugeführt werden, und an welche ein Wahlschalter (44) angeschlossen ist, mit welchem die für die jeweilige Betriebsart von der Schaltlogik erzeugten Schaltsignale für den elektronischen Schalter (20) einstellbar sind.

3. Gerät nach Anspruch 1 oder 2, gekennzeichnet durch passiv angesteuerte Kopfhöreranschlüsse (KH 1, KH 2).

4. Gerät nach Anspruch 2 und 3, gekennzeichnet durch einen mit Widerstandselementen ($R_A$, $R_B$, $R_C$) aufgebauten, passiven Wahlschalter (44) zur Betriebsarteinstellung der Kopfhöreranschlüsse, wobei je nach Stellung des Wahlschalters jeweils einer der Widerstände zur Festlegung eines vorgebbaren Schaltsignalpegels über eine gemeinsame Schaltleitung einem Messwiderstand ($R_m$) einer Hilfsspannungsquelle ($U_H$) der logischen Verknüpfungsschaltung (46) in Reihe geschaltet ist.

5. Gerät nach Anspruch 1, gekennzeichnet durch einen im Signalweg zum Kopfhöreranschluss liegenden Niederfrequenzverstärker (40).

6. Gerät nach einem oder mehreren der vorhergehenden Ansprüche, gekennzeichnet durch einen Anschlusskasten (24), welcher die Kopfhöreranschlüsse, den Wahlschalter (44) und einen gegebenenfalls damit kombinierten Ein/Ausschalter sowie Balance- und Lautstärkeregler zur Fernbedienung des Gerätes enthält.

7. Gerät nach einem oder mehreren der Ansprüche 1 bis 5, gekennzeichnet durch drahtlos mit dem Gerät verbundene Kopfhörer.

8. Gerät nach Anspruch 7, gekennzeichnet durch eine Infrarot-Übertragungsstrecke zwischen Gerät und Kopfhörer.

**Claims**

1. Car radio cassette unit including a cassette section (16) and radio traffic service decoder (18) comprising analysis of the service announcement pilot and an electronic multiple switch (20), which is controlled in dependence on this analysis, for automatically switching the broadcast sound to the speaker or speakers (14) of the unit on reception of a traffic service announcement from an FM radio traffic service transmitter, characterised by an additional circuit for at least one headphone connection which, retaining the automatic announcement facility, can be connected via other signal paths,

controlled by means of selectable switching signals (C, D), of the electronic switch ($20_{II}$) in different operating modes selectably comprising cassette and/or radio operation optionally to the low-frequency output of the cassette section (12) or of the broadcast reception section.

2. Unit according to claim 1, characterised in that the additional circuit contains a logic circuit (46), to which the control signals (A', B'), triggered by the analysis stage of the traffic service decoder as a function of the service announcement pilot, are supplied, and to which a selction switch (44) is connected by means of which the switching signals, generated by the switching logic for the respective operating mode, can be set for the electronic switch (20).

3. Unit according to claim 1 or 2, characterised by passively controlled headphone connections (KH 1, KH 2).

4. Unit according to claim 2 or 3, characterised by a passive selction switch (44), constructed with resistance elements ($R_A$, $R_B$, $R_C$), for setting the operating mode of the headphone connections, in each case one of the resistors, depending on the position of the selction switch, being connected in series via a common switching line with a multiplier ($R_m$) of an auxiliary voltage source ($U_H$) of the logic circuit (46) in order to establish a predeterminable switching signal level.

5. Unit according to claim 1, characterised by a low-frequency amplifier (40) which is located in the signal path to the headphone connection.

6. Unit according to one or several of the preceding claims, characterised by a connection box (24) containing the headphone connections, the selction switch (44) and an on/off switch, possibly combined with the former, and balance and volume controls for remote control of the unit.

7. Unit according to one or several of claims 1 to 5, characterised by headphones comprising a wireless connection to the unit.

8. Unit according to claim 7, characterised by an infrared transmission path between the unit and the headphones.

**Revendications**

1. Appareil autoradio-lecteur de cassette avec une partie cassette (16) et un décodeur de radio de circulation (18) avec exploitation de la reconnaissance de message et un commutateur multiple (20), électronique commandé en fonction de ceux-ci pour la commutation automatique du son radio sur le ou les haut-parleurs (14) de l'appareil à la réception d'un message de circulation d'un émetteur radio FM de circulation, caractérisé par un circuit supplémentaire pour au moins une prise de casque à écouteurs, qui, tout en conservant le circuit automatique de message, peut être raccordée par d'autres chemins de transmission de signaux du commutateur électronique ($20_{II}$) par des signaux de commutation (C, D) susceptibles d'être choisis, pour différents modes de fonctionnement comprenant le mode cassette et/ou le mode radio, sélectivement à la sortie basse fréquence de la partie cassette (12) ou de la partie récepteur radio.

2. Appareil selon la revendication 1, caractérisé en ce que le circuit complémentaire comporte un circuit de combinaison logique (46) qui reçoit les signaux de commande (A', B') fournis par l'étage d'exploitation du décodeur de circulation en fonction de la reconnaissance de message, circuit auquel est relié un commutateur-sélecteur (44) permettant de régler les signaux de commutation du commutateur électronique (20) générés par la logique de commutation suivant le mode de fonctionnement.

3. Appareil selon la revendication 1 ou 2, caractérisé par des prises de casque à écouteurs (KH 1, KH 2) à commande passive.

4. Appareil selon la revendication 2 et 3, caractérisé par un commutateur-sélecteur passif (44) composé d'éléments résistants ($R_A$, $R_B$, $R_C$) pour régler le mode de fonctionnement des prises de casque à écouteurs et suivant la position du commutateur-sélecteur, chaque fois l'une des résistances pour fixer un niveau de signal de commutation prédéterminé, est branchée en série par une ligne de commutation commune avec une résistance de mesure ($R_m$) d'une source de tension auxiliaire ($U_H$) sur le circuit de combinaison logique (46).

5. Appareil selon la revendication 1, caractérisé par un amplificateur basse fréquence (40) monté dans le chemin du signal allant vers la prise des casques à écouteurs.

6. Appareil selon l'une ou plusieurs des revendications précédentes, caractérisé par un boîtier de raccordement (24) qui comporte les prises des casques à écouteurs, le commutateur-sélecteur (44) qu'un commutateur marche/arrêt qui est le cas échéant combiné ainsi qu'un dispositif de réglage de l'équilibre et du volume sonore pour la télécommande de l'appareil.

7. Appareil selon l'une ou plusieurs des revendications 1 à 5, caractérisé par des casques à écouteurs reliés par une liaison sans fil à l'appareil.

8. Appareil selon la revendication 7, caractérisé par un chemin de transmission à infrarouge entre l'appareil et le casque à écouteurs.

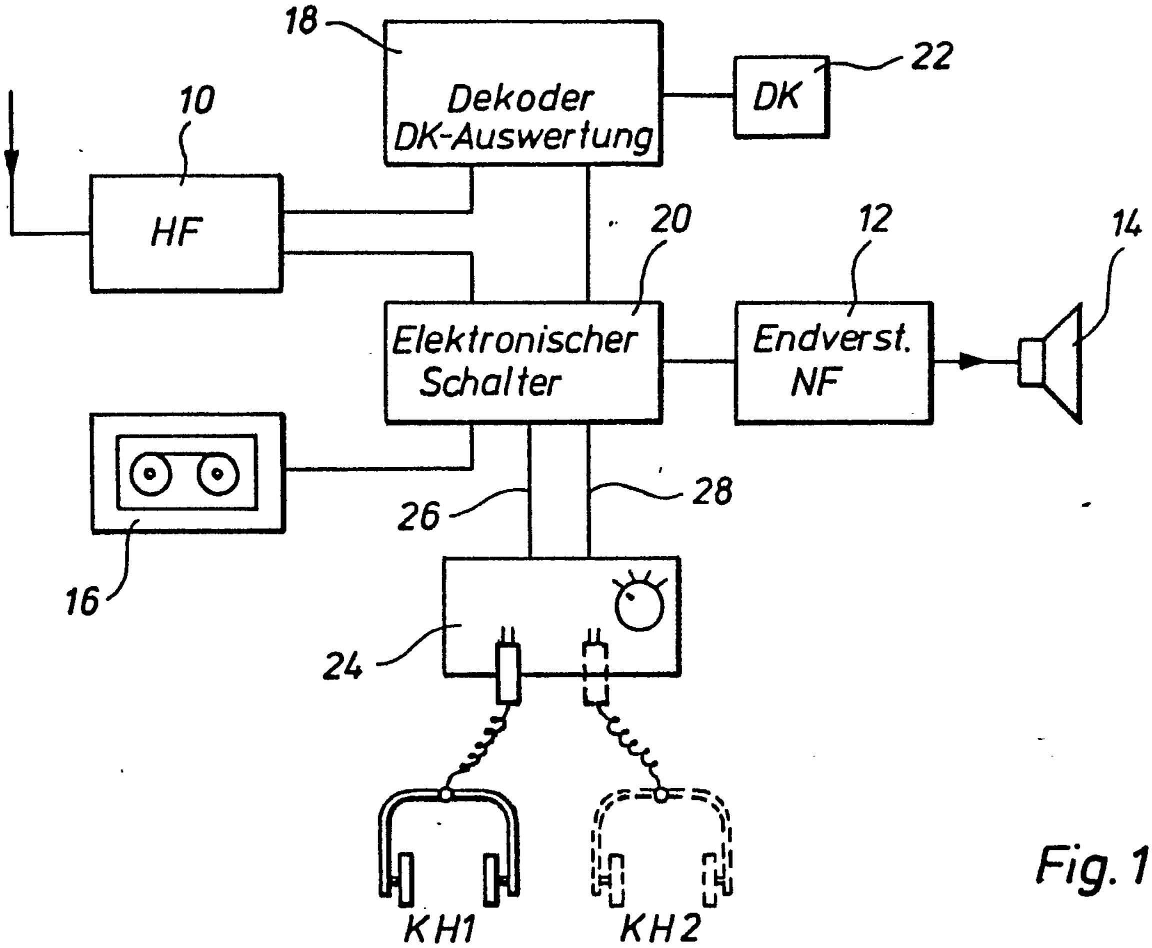


Fig. 1

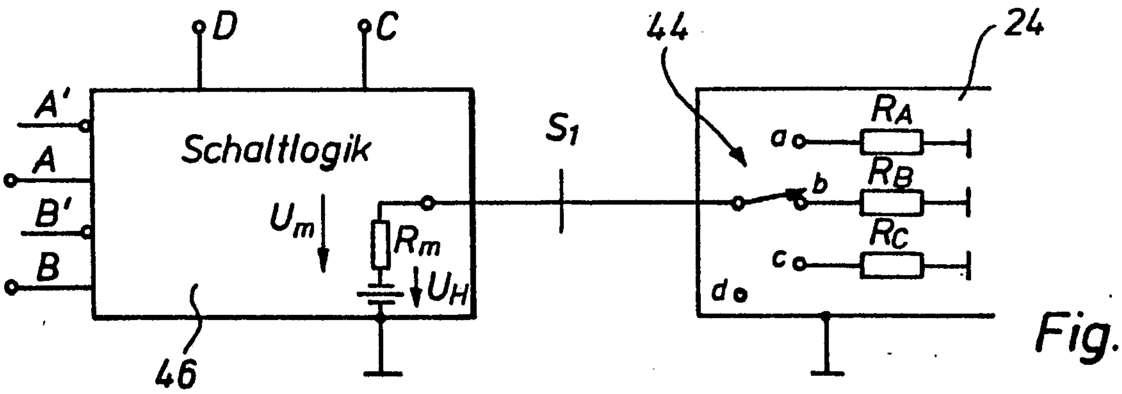


Fig. 4

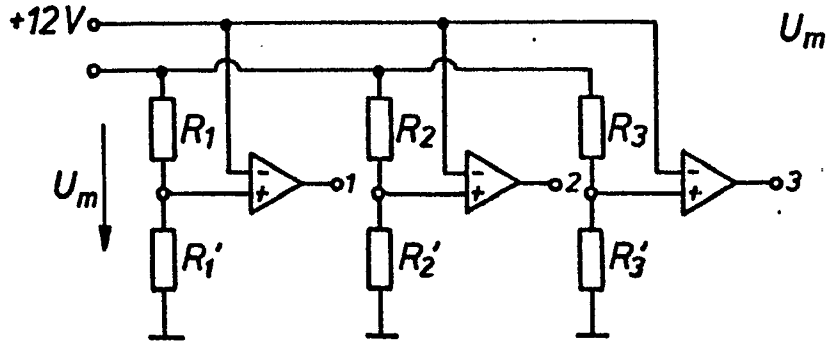


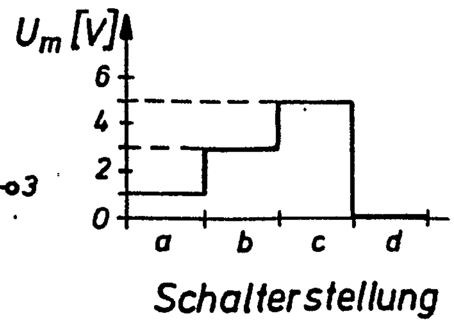


Fig. 5

Fig. 6

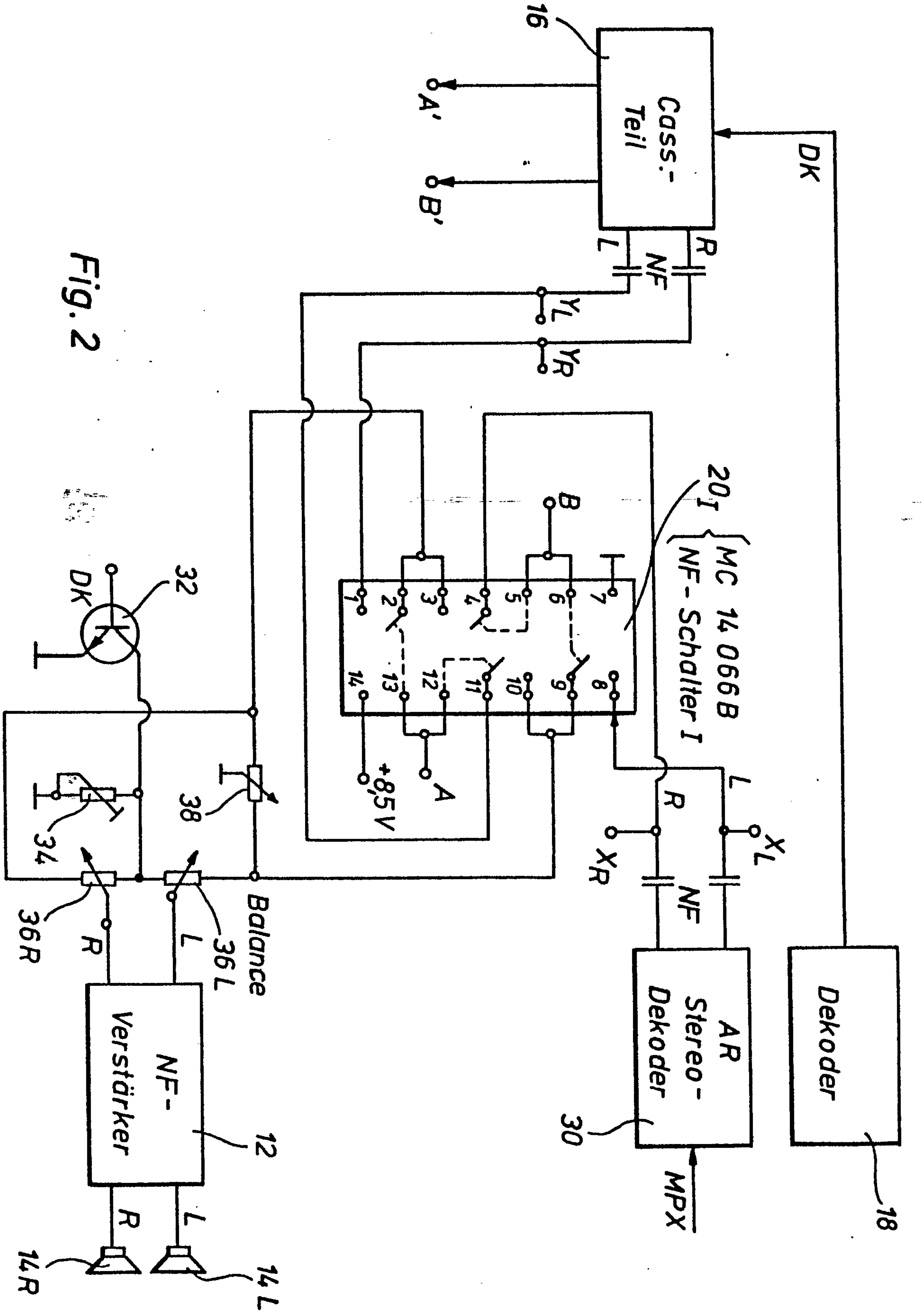
Cass.-Teil
16
A'
B'
DK
L
NF
R
$Y_L$
$Y_R$
$20_I$
MC 14 066 B
NF-Schalter I
B
A
+8,5V
$X_L$
$X_R$
AR Stereo-Dekoder
30
MPX
Dekoder
18
32
DK
34
38
36R
36L
Balance
NF-Verstärker
12
14R
14L

Fig. 2

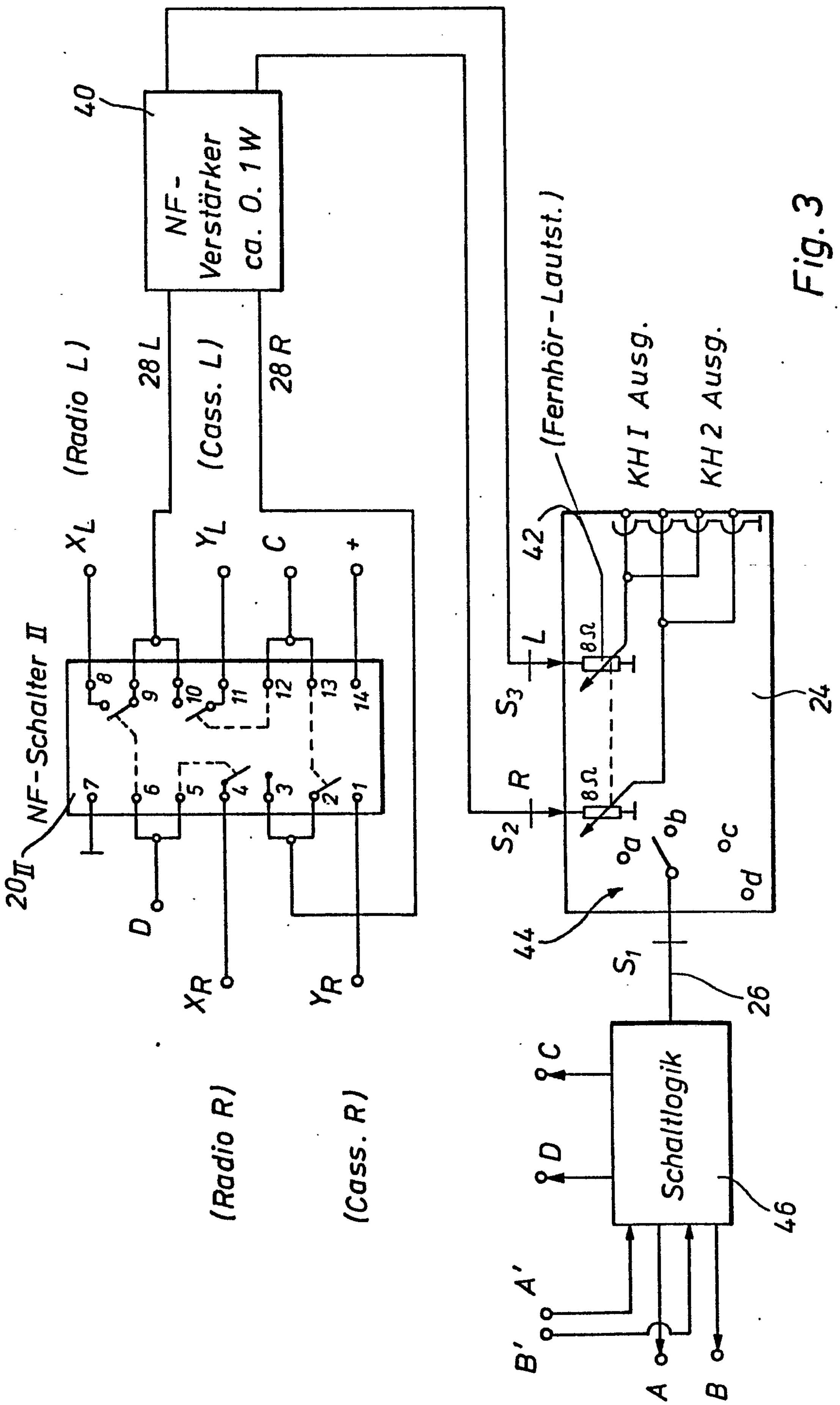
NF-Verstärker ca. 0.1 W
40
28 L
28 R
(Radio L)
(Cass. L)
(Radio R)
(Cass. R)
NF-Schalter II
20II
XL
YL
C
+
D
XR
YR
(Fernhör-Lautst.)
KH I Ausg.
KH 2 Ausg.
42
L
R
8Ω
8Ω
S3
S2
S1
24
44
26
a
b
c
d
Schaltlogik
46
C
D
A'
B'
A
B

Fig. 3